(19) **Europäisches Patentamt / European Patent Office / Office européen des brevets**

(11) **EP 2 499 511 B1**

(12) **FASCICULE DE BREVET EUROPEEN**

(45) Date de publication et mention de la délivrance du brevet:
**16.03.2016 Bulletin 2016/11**

(21) Numéro de dépôt: **10773932.8**

(22) Date de dépôt: **10.11.2010**

(51) Int Cl.:
*G01S 3/50* (2006.01)    *G01S 3/74* (2006.01)
*H04L 25/02* (2006.01)

(86) Numéro de dépôt international:
**PCT/EP2010/067229**

(87) Numéro de publication internationale:
**WO 2011/058067 (19.05.2011 Gazette 2011/20)**

(54) **PROCEDE DE GONIOMETRIE DE MULTI-TRAJETS AVEC UN RECEPTEUR 2 VOIES**

VERFAHREN ZUR MESSUNG DER WINKEL VON MEHREREN WEGEN MIT EINEM ZWEIWEGE-EMPFÄNGER

METHOD FOR MEASURING THE ANGLES OF MULTIPLE PATHS BY MEANS OF A TWO-WAY RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2009 FR 0905474**

(43) Date de publication de la demande:
**19.09.2012 Bulletin 2012/38**

(73) Titulaire: **Thales**
**92200 Neuilly Sur Seine (FR)**

(72) Inventeurs:
• **FERREOL, Anne**
  **F-92700 Colombes (FR)**

• **OGGIONI, Baptiste**
  **F-92700 Colombes (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-95/14935     FR-A1- 2 805 614**
**US-B1- 6 489 923**

Printed by Jouve, 75001 PARIS (FR)

**Description**

L'objet de l'invention concerne un procédé et un système permettant de trouver la Direction d'arrivée de plusieurs signaux sources Ei dans un réseau comprenant N capteurs ou antennes de réception, avec au moins deux voies de réception, une des antennes du réseau étant reliée de manière continue à un récepteur $3_1$, via un commutateur bi-voies, les autres N-1 antennes recevant le signal uniquement lorsqu'elles sont reliées par l'intermédiaire du commutateur deux voies à un deuxième récepteur $3_2$. Le commutateur a une durée de commutation T et un temps de commutation $\delta$T.

Dans la suite de la description, la lettre $p$ désigne l'indice d'un trajet et $M$ le nombre de trajets.

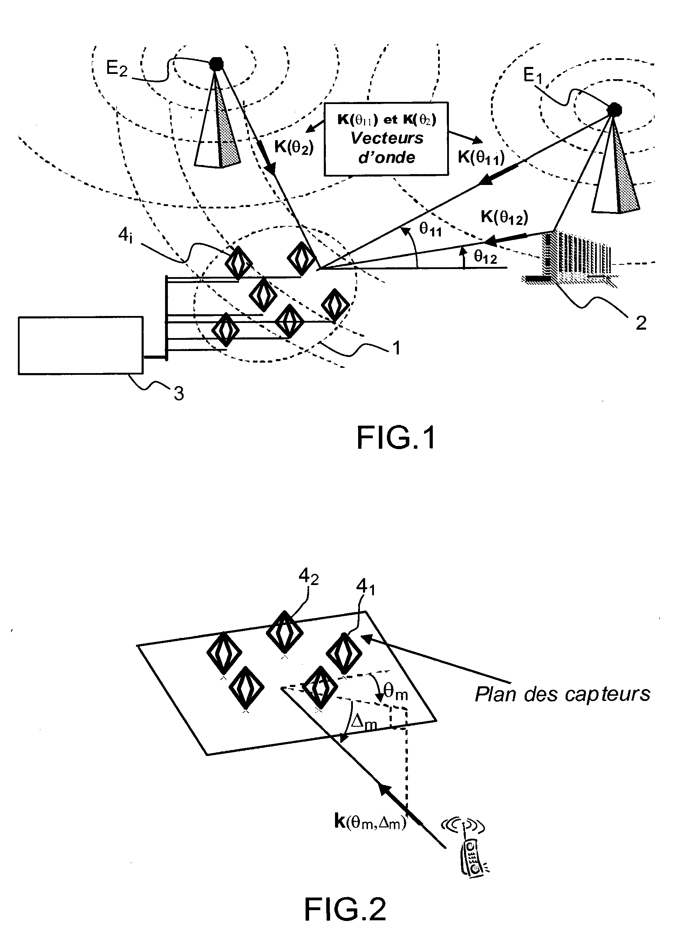

Le domaine technique dans lequel l'objet de la présente invention s'applique, concerne le traitement d'antennes qui traite les signaux de plusieurs sources émettrices à partir d'un système de réception multi-capteurs. Dans un contexte électromagnétique, les capteurs sont des antennes et les sources radioélectriques se propagent avec une polarisation dépendante de l'antenne d'émission. Dans un contexte acoustique, les capteurs sont des microphones (ou hydrophones) et les sources sont sonores. La figure 1 montre un exemple de système de traitement d'antennes qui est composé d'un réseau 1 de capteurs ou d'antennes 4i recevant des signaux issus de différentes sources avec des angles d'arrivée $\theta_p$ ou $\theta_m$ différents et d'un récepteur 3, la figure montre aussi les obstacles 2 sur lesquels les signaux sont réfléchis. Le domaine est plus particulièrement celui de la goniométrie qui consiste à estimer les angles d'arrivées ou incidences des sources Ei (DOA pour Direction Of Arrival en anglo-saxon). Les capteurs ou antennes 4i élémentaires du réseau qui reçoivent les signaux émis par les sources avec une phase et une amplitude dépendant en particulier de leurs angles d'incidences et de la position des capteurs. Les angles d'incidence sont paramétrés en une dimension 1 D par l'angle d'azimut $\theta_p$ ou $\theta_m$ et en deux dimensions 2D par l'azimut $\theta_p$ ou $\theta_m$ et l'élévation $\Delta_p$ ou $\Delta_m$. D'après la figure 2, on définit une goniométrie 1 D par des techniques qui estiment uniquement l'azimut en supposant que les ondes des sources se propagent dans le plan du réseau de capteurs. Lorsque la technique de goniométrie estime conjointement l'azimut et l'élévation d'une source on parle de goniométrie 2D.

L'un des objectifs des techniques de traitement d'antennes est principalement d'exploiter la diversité spatiale générée par la réception multi-antennes des signaux incidents qui consiste à utiliser la position spatiale des antennes du réseau pour mieux exploiter les divergences en incidence et en distance des sources.

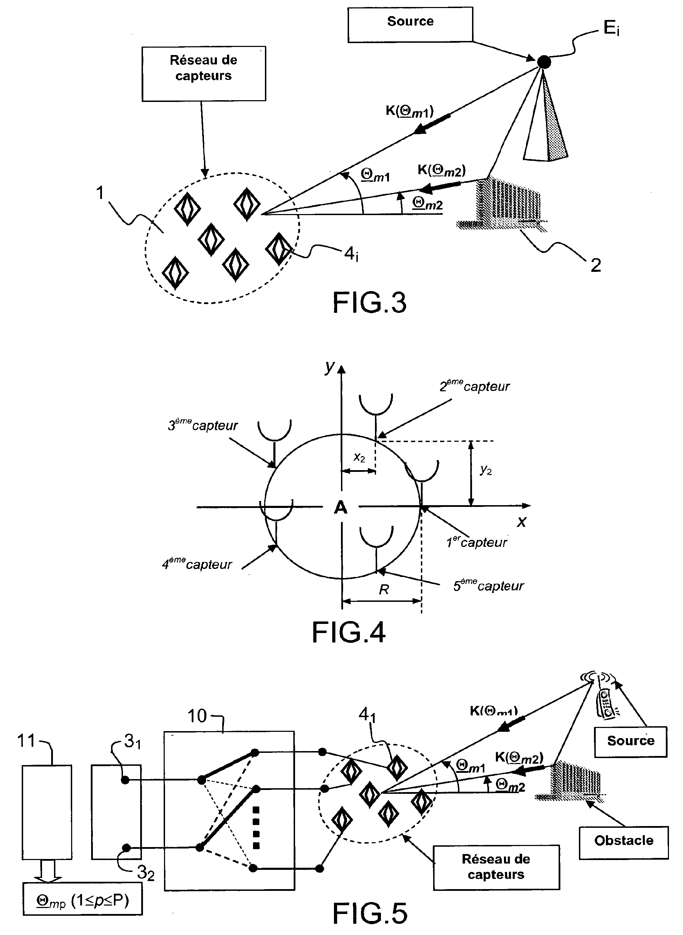

Le domaine technique dans lequel se situe l'objet de la présente demande de brevet est celui de la goniométrie en présence de multi trajets résultant de la présence d'obstacles placés sur le trajet des signaux émis par la source comme il est illustré à la figure 3. La m$^{ième}$ source E$_m$ se propage selon P trajets d'incidence $\theta_{mp}$ (1≤p≤M) qui sont provoqués par M-1 obstacles dans l'environnement radioélectrique.

L'un des problèmes à résoudre est celui de la goniométrie des multi-trajets d'un émetteur émettant un signal qui comporte au moins un signal de référence TSC ou d(t) au sein d'un message reçu et qui utilise la connaissance du filtre de la mise en forme du message, dans le cadre d'un système de réception de type bi-voies. Le système de réception est dit bi-voies, car il comporte deux récepteurs $3_1$ et $3_2$, qui sont commutés alternativement et périodiquement sur un couple d'antennes 4i, 4j du réseau de capteurs comme il sera décrit dans la description qui suit. La goniométrie de multi-trajets nécessite la mise en oeuvre d'un procédé haute résolution nécessitant un nombre de voies de réception strictement supérieur au nombre de trajets. Plus particulièrement, les méthodes de goniométrie utilisant un signal de référence supposent que le signal de référence soit détecté simultanément sur tous les capteurs. Avec un système de réception bi-voies, le signal de référence TSC peut être vu typiquement sur un seul couple d'antennes du réseau de capteurs. En effet, le signal de référence peut avoir une durée inférieure au temps de commutation T.

Il est connu de l'art antérieur, des méthodes de goniométrie 2 voies. Par exemple, le brevet du Demandeur US 6 989 789 divulgue un système et un procédé pour réaliser une goniométrie de plusieurs sources en présence d'un système de réception composé de 2 voies. Dans ce procédé, il est envisagé les 2 variantes de mise en oeuvre suivantes :

- Une première alternative applicable dans le cas général, plusieurs sources et plusieurs trajets, nécessite un algorithme coûteux en temps de calcul tel que le maximum de vraisemblance, méthode connue de l'Homme du métier,
- Une deuxième alternative dont le coût de calcul est équivalent à celui de l'algorithme MUSIC connu des spécialistes du traitement de signal, nécessite l'existence de sources (trajet d'un émetteur) ayant des spectres différents. Cette alternative ne peut être appliquée en présence de multi-trajets ou dans un réseau de radio-communication tel que le GSM où tous les mobiles ont le même spectre.

Il est aussi connu des méthodes de goniométrie à référence par exemple dans les brevets US 6 693 591 et US 7 019 635 du Demandeur qui utilisent des signaux de référence et qui présentent l'avantage d'isoler un émetteur parmi les autres. On isole la matrice de covariance de l'émetteur dont le signal de référence est connu afin d'estimer les Directions d'Arrivée des trajets en mettant en oeuvre une des méthodes connues de l'Homme du métier de type MUSIC ou maximum de vraisemblance. Dans ce procédé, le système de réception doit être composé d'autant de voies de réception que d'antennes ou capteurs et le signal de référence TSC ou d(t) doit apparaître de façon synchrone sur toutes les antennes du réseau. Sachant que le signal de référence est de durée limitée, le signal peut être détecté sur une seule commutation dans un système de réception bi-voies lorsque le temps de la commutation est supérieur à la durée du signal de référence, ce qui peut engendrer une perte d'informations.

Du point de vue du Demandeur, les méthodes décrites dans les références précitées et connues de l'art antérieur, permettent une résolution partielle du problème technique posé. Les méthodes de goniométrie Haute Résolution avec un système de réception bi-voies envisagées dans le brevet US 6 989 789 ne sont pas applicables en présence de multi-trajets avec un coût de calcul équivalent à MUSIC car la deuxième alternative nécessite des sources ayant des spectres différents. En effet, les signaux de chacun des trajets ne sont que des versions plus ou moins retardées du signal émis, qui ont de fait la même densité spectrale et la même fonction d'auto-corrélation. Les méthodes de goniométrie décrites dans les 2 brevets US 6 693 591 et US 7 019 635 nécessitent que le signal de référence soit présent sur toutes les commutations d'antennes. Au pire, ce signal peut être présent uniquement sur 2 antennes permettant d'effectuer une goniométrie avec le réseau associé de 2 antennes. Toutefois cela permet au mieux d'estimer la direction d'arrivée d'une seule source sous la condition que deux antennes soient distantes de moins de $\lambda/2$.

L'algorithme MUSIC exploite les propriétés de la matrice de covariance du signal afin d'estimer des paramètres tels que les incidences des sources. Or le système de commutation présente l'inconvénient de ne donner accès qu'à une partie des informations de la matrice de covariance.

En effet, dans le cas multivoies, il est possible d'estimer les $N^2$ éléments $r_{xixj}$ de la matrice de covariance $\mathbf{R}_{xx}$ qui s'écrit :

$$\mathbf{R}_{xx} = \begin{bmatrix} r_{x_1 x_1} & r_{x_1 x_2} & \cdots & r_{x_1 x_N} \\ r_{x_2 x_1} & r_{x_2 x_2} & & \vdots \\ \vdots & & \ddots & \\ r_{x_N x_1} & \cdots & & r_{x_N x_N} \end{bmatrix}$$

Or, dans le cas bi-voies, il est impossible d'estimer toutes les intercorrélations $r_{xixj}$, pour $i \neq j$ et $i>1$ nécessaires pour reconstruire la matrice $\mathbf{R}_{xx}$.

Le procédé selon l'invention consiste donc à adapter l'algorithme de goniométrie afin de ne pas utiliser la matrice de covariance selon l'art antérieur, mais d'utiliser une matrice de direction $\mathbf{A}$ dont les colonnes correspondent à des vecteurs de direction ou vecteurs directeurs de chacun des trajets, afin de séparer les différents trajets. La construction de la matrice de covariance s'appuie notamment sur la connaissance des séquences d'apprentissage contenues dans le message et aussi sur la connaissance du filtre de mise en forme de la modulation linéaire. Dans le cas du GSM (Global System Mobile) où la modulation est une modulation de type GMSK (Gaussian Minimum Shift Keying), le filtre de mise en forme utilisé sera celui de la version linéarisé de la GMSK et les séquences d'apprentissage seront celles des signaux TSC (abrégé anglo-saxon de Training Sequence Code), TCH (Traffic Channel) ou RACH (Random Access Channel). Le procédé selon l'invention va contenir une première étape de synchronisation qui utilise les symboles des séquences de référence, puis le signal reçu est démodulé autour de la séquence en utilisant le filtre de mise en forme de la modulation concernée (GSM, UMTS, etc ...).

L'invention concerne un procédé pour déterminer les angles d'arrivée ou la Direction d'Arrivée des multi-trajets associés à un émetteur ou source Ei dans un système comportant N antennes de réception, une desdites antennes étant une antenne de référence reliée en continu à un premier récepteur et les N-1 autres antennes étant reliées à un deuxième récepteur, de manière discontinue grâce à un commutateur bivoies, ladite antenne de référence recevant un signal $x_1(t)$ en continu, ledit signal comprenant une séquence de référence d(t), caractérisé en ce qu'il comporte au moins les étapes suivantes :

- effectuer une synchronisation symbole sur l'antenne de référence puis estimer la matrice de passage entre le signal $x_1(nT_s)$ reçu sur ladite antenne de référence et les symboles $c_n$, où $T_s$ est le temps symbole,
- construire deux filtres qui permettront d'estimer et de détecter les symboles de part et d'autre de la séquence de référence d(t) constituées des symboles $d_n$,
- estimer la matrice de canal $\mathbf{A}_{1i}.\Omega.\mathbf{H}.$ sur chacune des commutations 1 à N à partir de la connaissance des symboles $c_n$ estimés et des signaux $x_1(nT_s)$, et construire la matrice de canal $\mathbf{A}.\Omega.\mathbf{H}.$ où $\mathbf{H}$ est la matrice de canal définie par

$$\mathbf{x}(nT_s) = \mathbf{A}.\Omega.\mathbf{H}.\mathbf{c}_n + \mathbf{b}(nT_s) \quad \text{où} \quad \mathbf{H} = \begin{bmatrix} \mathbf{h}(\tau_1)^T \\ \vdots \\ \mathbf{h}(\tau_M)^T \end{bmatrix}$$

avec **x**(nTs) le signal reçu sur les N antennes avec **b**(nT$_s$) le bruit et $\tau_p$ les valeurs des retards des trajets réfléchis,

• estimer la valeur de l'angle $\theta_p$ à partir de la matrice de canal **A**.$\Omega$.**H**. sachant que

$$\begin{cases} x_1\left(nT_s\right) \approx \mathbf{A}_1.\Omega.\mathbf{H}.\mathbf{c}_n = \sum_{k=-P}^{P} h_k c_{n-k} \\ x_1\left((n+i)T_s\right) \approx \mathbf{A}_1.\Omega.\mathbf{H}.\mathbf{d}_n = \sum_{k=-P}^{P} h_k d_{n-k} \quad \text{pour } 1 \le n \le K \end{cases}$$

où h$_i$ est le i-ième coefficient de la matrice de canal **A**$_1$.$\Omega$.**H**. et les deux filtres avant et arrière vérifient respectivement les équations suivantes :

$$\hat{c}_{n-P} = \frac{x_1\left(nT_s\right) - \displaystyle\sum_{k=-P+1}^{P} h_k c_{n-k}}{h_{-P}}$$

$$\hat{c}_{n+P} = \frac{x_1\left(nT_s\right) - \displaystyle\sum_{k=-P}^{P-1} h_k c_{n-k}}{h_P}$$

L'étape de synchronisation symbole est, par exemple, exécutée de la manière suivante :

en considérant le signal reçu sur l'antenne de référence (4$_1$) $x_1((n+i)T_s)$ = **A**$_1$.$\Omega$.**H**.**d**$_n$ + $b_1((n+i)T_s)$ pour $1 \le n \le K$ où K est le nombre de symboles de la séquence de référence, où **A**$_1$ est la première ligne de la matrice **A**, chercher l'indice i qui minimise l'écart entre $x_1((n+i)T_s)$ signal reçu sur l'antenne (4$_1$) et **A**$_1$.$\Omega$.**H**.**d**$_n$ tel que

$$i = \min_k \left(Cri(k)\right) \quad \text{avec} \quad Cri(k) = \sum_{n=1}^{K} \left| x_1\left((n+k)T_s\right) - \mathbf{A}_1.\Omega.\mathbf{H}.\mathbf{d}_n \right|^2$$

Une fois que l'indice *i* de synchronisation est estimé, la matrice canal **A**$_1$.$\Omega$.**H** est estimée en effectuant

$$\overline{\mathbf{A}_1.\Omega.\mathbf{H}} = \hat{r}_{x_1 \mathbf{d}_n}\left(k\right)\left(\hat{\mathbf{R}}_{\mathbf{d}_n \mathbf{d}_n}\right)^{-1}$$

Le procédé peut comporter une étape d'estimation à partir des valeurs estimées des coefficients $\hat{c}_n$, puis une étape où l'on applique une méthode MMSE qui consiste à minimiser la distance euclidienne entre $\hat{c}_n$ et les états $\eta_k$ d'une constellation.
Dans le cas de la GMSK qui est à 4 états comme la QPSK alors $\eta_1$ = 1, $\eta_2$ = -1, $\eta_3$ = *j* et $\eta_4$ = -*j*, le symbole démodulé est alors

$$\overline{c}_n = \eta_k \quad \text{tel que } k = \min_i \left(\left| \hat{c}_n - \eta_i \right|^2\right)$$

Dans le cas de la GMSK où le module des symboles vérifie |c$_n$| = 1, le procédé comprend une étape d'amélioration du calcul MMSE en effectuant

$$\overline{c}_n = j^n \alpha_k \quad \text{tel que } k = \min_i \left(\left| \exp\left(jangle(\hat{c}_n)\right) j^{-n} - \alpha_i \right|^2\right)$$

Selon une variante de réalisation, la matrice de canal complète **A**.Ω.**H** est estimée à partir des symboles {c_n} et des observations commutées qui vérifie

$$x_i(nT_s) = \mathbf{A}_i.\Omega.\mathbf{H}.\mathbf{c}_n + b_i(nT_s) \text{ pour } \frac{(i-1)T}{T_s} \leq n \leq \frac{iT}{T_s}$$

où **A**_i.Ω.**H** est la i-ième ligne de **A**.Ω.**H**.

La matrice **A**_i.Ω.**H** est, par exemple, obtenue au sens des moindres carrés en minimisant l'écart entre $x_i(nT_s)$ et **c**_n pour obtenir :

$$\overline{\mathbf{A}_i.\Omega.\mathbf{H}} = \hat{r}_{x_i\mathbf{c}_n}\left(\hat{\mathbf{R}}_{\mathbf{c}_n\mathbf{c}_n}\right)^{-1}$$

$$\begin{cases} \hat{r}_{x_i\mathbf{c}_n}(k) = \sum_{n=n_1}^{n_2} x_1(nT_s).\mathbf{c}_n^H \\ \hat{\mathbf{R}}_{\mathbf{c}_n\mathbf{c}_n} = \sum_{n=n_1}^{n_2} \mathbf{c}_n.\mathbf{c}_n^H \end{cases} \text{ avec } \begin{cases} n_1 = \dfrac{(i-1)T}{T_s} \\ n_2 = \dfrac{iT}{T_s} \end{cases}$$

La matrice **A**.Ω.**H** est alors reconstruite de la manière suivante

$$\overline{\mathbf{A}.\Omega.\mathbf{H}} = \begin{bmatrix} \overline{\mathbf{A}_1.\Omega.\mathbf{H}} \\ \vdots \\ \overline{\mathbf{A}_N.\Omega.\mathbf{H}} \end{bmatrix}$$

Selon une autre variante, le procédé comporte au moins une étape où l'on applique une méthode de goniométrie sur chacune des colonnes de **A** afin de trouver les valeurs d'incidence θ_p de chacun des trajets, et les étapes suivantes :

- estimer les valeurs des retards τ_p pour 1≤p≤M où M est le nombre de trajets à partir de la matrice (**A**.Ω.**H**)^H (**A**.Ω.**H**). et de la connaissance du vecteur**h**(τ), et
- à partir de la connaissance de **h**(τ) et des valeurs des retards τ_p déterminer une matrice **H** et en déduire la matrice **A** ou une matrice dépendant linéairement de **A.**

Selon un autre mode de réalisation, le procédé comporte une étape où l'on applique un algorithme de type MUSIC sur la matrice (**A**.Ω.**H**)(**A**.Ω.**H**)^H.

D'autres caractéristiques et avantages du procédé et du système selon l'invention apparaîtront mieux à la lecture de la description qui suit d'un exemple de réalisation donné à titre illustratif et nullement limitatif d'un exemple de réalisation annexé des figures qui représentent :

- La figure 1 le schéma d'un réseau de capteurs dans lequel l'invention peut être implémentée et le trajet d'un émetteur se propageant dans ce réseau,
- La figure 2, l'incidence d'une source,
- La figure 3, la propagation en multi-trajets,
- La figure 4, un exemple d'un réseau de capteurs de position,
- La figure 5, un exemple de système de réception bi-voies selon l'invention,
- La figure 6, un synoptique de commutation des capteurs au cours du temps,
- La figure 7, un exemple de signal s(t) contenant des signaux de référence,

- La figure 8, un exemple de synoptique des différentes étapes mises en oeuvre par le procédé selon l'invention,
- La figure 9, un exemple de représentation de la synchronisation symbole pour le cas de trajets corrélés,
- la figure 10, une représentation de la synchronisation symbole pour le cas des trajets décorrélés,
- la figure 11, une synchronisation symbole décalée ou shiftée,
- la figure 12, un exemple de résultat obtenu par la mise en oeuvre du procédé selon l'invention.

Afin de mieux faire comprendre l'objet de l'invention, l'exemple qui suit est donné, à titre illustratif, dans le cadre d'un signal de type GSM, dans lequel un signal de référence TSC est toujours présent dans un message, le signal étant modulé avec une modulation GMSK.

Sans sortir du cadre de l'invention, les étapes qui vont être décrites par la suite peuvent aussi être utilisées pour tous types de signaux modulés linéairement qui comportent une structure ou un format tel qu'il comporte une séquence sur laquelle peut se synchroniser un récepteur, et dont on connaît l'expression du filtre de mise en forme ou filtre utilisé pour moduler les symboles du message.

Les signaux de radio-communication ont, de par leur nature, des signaux de référence dans le but, notamment, de construire des récepteurs ou égaliseur qui annulent les effets des multi-trajets ainsi que ceux des interférences. C'est, par exemple, le cas des signaux GPS, des signaux radar qui sont généralement composés de répliques pour mesurer le temps de propagation entre l'émission et la réception.

Sur la figure 5 est représenté un exemple d'architecture de système comprenant N capteurs 4i en liaison avec un commutateur 10, lui-même relié à deux récepteurs $3_1$, $3_2$. La première antenne $4_1$ reçoit en continu un signal $x_1(t)$, l'antenne est reliée au récepteur de référence $3_1$. Les signaux $x_n(t)$ des N-1 autres antennes commutent régulièrement sur le deuxième récepteur $3_2$, c'est-à-dire que le récepteur $R_2$ va recevoir les signaux reçus des N-1 autres antennes qui ne sont pas l'antenne de référence.

La durée d'une commutation est notée T et le temps de commutation $\delta T$. Ce type de récepteur bi-voies permet ainsi de récupérer une quantité d'informations pratiquement identique à celle reçue par un système multi-voies et donc d'estimer des directions d'arrivée en adaptant les algorithmes de goniométrie. Ceci permet notamment de réduire le coût d'un système de réception tout en conservant quasiment les mêmes performances.

Avant de décrire les étapes spécifiques mises en oeuvre par le procédé selon l'invention, quelques rappels sur la composition d'un signal dans le cadre d'une modulation linéaire telle que la modulation GMSK sont donnés.

## Cas du système classique multi-voies en présence de multi-trajets

Le signal émis $s(t)$ par les émetteurs du système de commutation est dans l'exemple celui d'une modulation linéaire contenant un signal de référence $d(t)$. Le signal s(t) qui est transmis au travers d'un canal de propagation, subit le phénomène précédemment évoqué des multi-trajets, puis est capté par un réseau de N antennes. Le signal reçu sur les N antennes s'écrit donc :

$$\mathbf{x}(t) = \begin{bmatrix} x_1(t) \\ ... \\ x_N(t) \end{bmatrix} = \sum_{p=1}^{M} \rho_p \mathbf{a}(\theta_p) s(t - \tau_p) + \mathbf{b}(t) \qquad\qquad 3.1$$

où ($\rho_p, \tau_p, \theta_p$) sont respectivement les paramètres amplitude, retard de propagation, angle d'arrivée du *p-ième* trajet, *M* est le nombre de trajet, $\mathbf{a}(\theta_p)$ la réponse du réseau d'antennes à un trajet p arrivant selon un angle $\theta_p$ et $\mathbf{b}(t)$ le bruit. L'écriture matricielle de l'équation 3.1 est la suivante :

$$\mathbf{x}(t) = \mathbf{A}.\Omega.\mathbf{s}(t) + \mathbf{b}(t) \text{ où } \Omega = \begin{bmatrix} \rho_1 & 0 & 0 \\ 0 & \ddots & 0 \\ 0 & 0 & \rho_M \end{bmatrix} \qquad\qquad 3.2$$

est la matrice des amplitudes de M trajets, $\mathbf{A}=[\mathbf{a}(\theta_1) \ ... \ \mathbf{a}(\theta_M)]$ est la matrice de mélange des trajets ou sources que l'on dénomme aussi « matrice directrice ». Les colonnes de cette matrice directrice sont les vecteurs directeurs des trajets.

$$\text{Le vecteur } \mathbf{s}(t) = \begin{bmatrix} s(t - \tau_1) \\ \vdots \\ s(t - \tau_M) \end{bmatrix}$$

est composé des signaux des multi-trajets qui sont des versions retardés du signal émis.

Le phénomène de multi-trajets est modélisé dans cet exemple par des multi-trajets spéculaires. Le signal émis lorsqu'il rencontre un obstacle est réfléchi dans une seule direction, contrairement à des multi-trajets diffus, réfléchis suivant un continuum de directions. A chaque trajet p est donc associé un unique triplet $(\rho_p, \tau_p, \theta_p)$ désignant respectivement la puissance, le retard de propagation et l'angle d'arrivée pour $1 \le p \le M$, sachant que $M$ est le nombre de trajets. On note alors :

$$\mathbf{a}(\theta) = \begin{bmatrix} a_1(\theta) & \dots & a_N(\theta) \end{bmatrix}^T \qquad\qquad 3.3$$

la réponse du réseau des N antennes à un signal arrivant selon un angle $\theta$. La réponse $a_i(\theta)$ de la $i^{ème}$ antenne à un signal arrivant selon un angle $\theta$ s'écrit en fonction des coordonnées $x_i$ et $y_i$ de l'antenne, de la longueur d'onde $\lambda$ du signal émis et de l'angle d'incidence $\theta$.

$$a_i(\theta) = \exp\left( 2j\pi \frac{[x_i \cos(\theta) + y_i \sin(\theta)]}{\lambda} \right) \qquad\qquad 3.4$$

**Cas du système deux voies en présence de multitrajets**

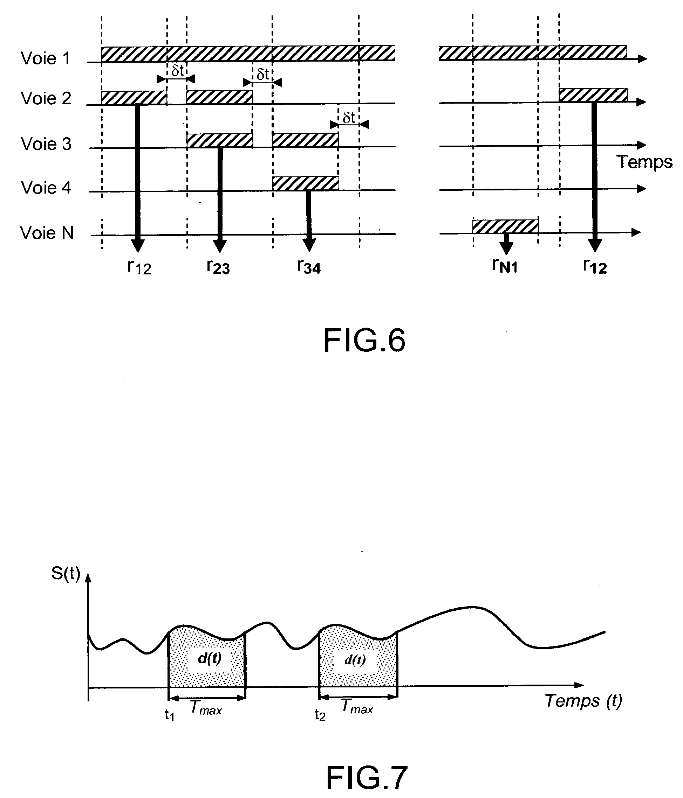

L'équation 3.1 est toujours vérifiée au niveau de la réception des antennes. Toutefois, le système d'acquisition 2 voies reçoit en continu sur le premier récepteur $3_1$ le signal $x_1(t)$, tandis que le deuxième récepteur $3_2$, du fait de la commutation, va recevoir alternativement les signaux $x_2(t)$ à $x_N(t)$ pour des tranches temporelles en « t » disjointes. Le système permet de corréler les signaux $x_i(t)$ et $x_j(t)$ lorsque i>1 et j>1. Le système dispose donc de signaux tronqués et non plus de la totalité des signaux reçus. Un exemple des signaux reçus sur les voies 1,..i, ..N est représenté à la figure 6. Les parties hachurées correspondent à la durée de réception du signal sur un capteur donné.

De manière à alléger les calculs de la description mathématique, quelques notations supplémentaires sont utilisées

$$\mathbf{x}_{ij}(t) = \begin{bmatrix} x_i(t) \\ x_j(t) \end{bmatrix} \qquad\qquad 3.5$$

correspond aux signaux reçus sur les $i^{ème}$ et $j^{ème}$ antennes. On note également $\mathbf{A}_{ij} = \lfloor \mathbf{a}_{ij}(\theta_1) \cdots \mathbf{a}_{ij}(\theta_M) \rfloor$ la sous-matrice de la matrice de direction $\mathbf{A}$ associée aux antennes i et j, car $\mathbf{A}_{ij}$ contient les $i^{ème}$ et $j^{ème}$ lignes de la matrice $\mathbf{A}$. Le vecteur $\mathbf{a}_{ij}(\theta) = [a_i(\theta)\ a_j(\theta)]^T$ est la réponse de ce couple d'antenne d'indice i, j à un signal arrivant selon un angle $\theta$ et est de la même manière un sous-vecteur de $\mathbf{a}(\theta)$.

**Hypothèse du contexte**

Le temps de commutation $\delta t$ du système d'acquisition sera par la suite considéré nul.

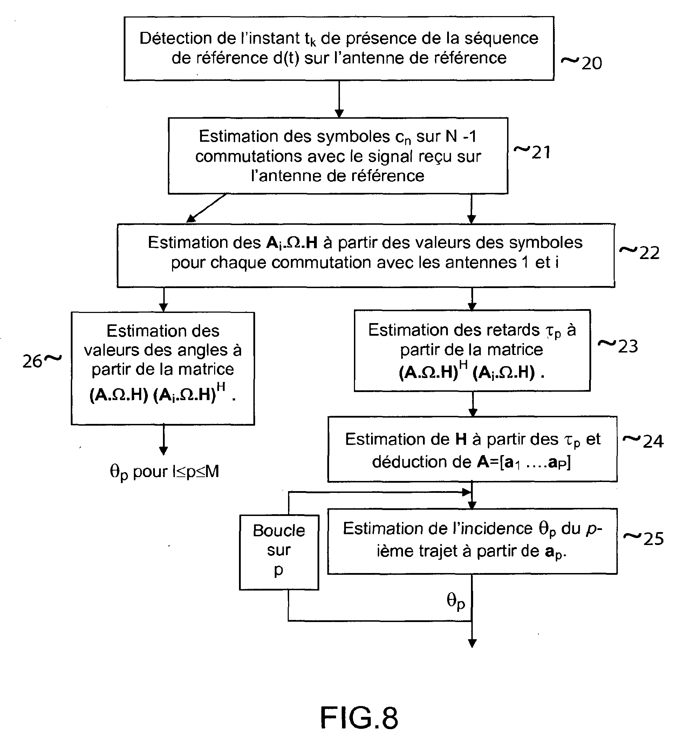

L'idée mise en oeuvre dans le procédé et le système selon l'invention (figure 8) est de concevoir un traitement des signaux permettant de reconstruire la matrice de direction $\mathbf{A}$ (ou une matrice dépendant de manière linéaire de $\mathbf{A}$) afin de séparer les M différents trajets. Le procédé appliquera ensuite un algorithme de goniométrie, par exemple, l'algorithme de type MUSIC sur chaque colonne de la matrice de direction précitée.

Pour cela l'objectif est de démoduler les signaux modulés linéairement autour de la séquence de référence, connaissant le filtre de mise en forme utilisé lors de la modulation du signal. Cette étape nécessite de connaître la position du premier symbole modulé de la séquence d(t) constituée de symboles dn dans les signaux reçus sur les antennes $4_1, ..., 4_N$. Une étape dite de synchronisation symbole est donc utilisée ici.

**Modélisation suivant une matrice de canal**

Le signal s(t) de l'équation 3.1 est supposé modulé linéairement en vérifiant

$$s(t) = \sum_i c_i \, C_0\left(t - iT_s\right) \qquad\qquad 4.1$$

où $C_0(t)$ est le filtre de mise en forme connu, $T_s$ est le temps symbole et les $c_i$ sont des symboles appartenant à une constellation. Dans le cas de la GMSK, le signal modulé s'écrit

$$s(t) = \exp\left( j2\pi h \sum_{n=-\infty}^{+\infty} a_n q(t - nT_s) \right) \approx \sum_i c_i \, C_0\left(t - nT_s\right) \qquad\qquad 4.2$$

où les symboles $a_n$ valent 1 ou -1, et où $q(t) = \int_{-\infty}^{t} g(u)du$ sachant que $g(t)$ est le filtrage d'une fonction portée par un filtre gaussien. La linéarisation de la GMSK est telle que

$$\begin{cases} C_0(t) = S_0(t)S_1(t)S_2(t) \text{ pour } |t| < 2T_s \\ c_n = j^m \prod_{i=-\infty}^{n} a_i \end{cases} \qquad\qquad 4.3$$

où

$$S_n(t) = \frac{\sin(\psi(t + (n-L)T_s))}{S} \quad \text{avec} \quad \begin{cases} \psi(t) = q(t - LT_s/2) \text{ si } t < 0 \\ \psi(t) = h\pi - q(t + LT_s/2) \text{ si } t \geq 0 \end{cases}$$

$$4.4$$

sachant que pour la GMSK du GSM L=3. La modulation GMSK peut alors être vue comme une QPSK modulé linéairement par le filtre $C_0(t)$. Selon 4.1 on peut écrire le signal modulé comme

$$s\left(nT_s + \tau\right) = \sum_{i=-P}^{P} c_{n+i} \, C_0\left(iT_s + \tau\right) = \mathbf{h}(\tau)^T \mathbf{c}_n \qquad\qquad 4.5$$

où $\mathbf{h}(\tau)^T = [C_0(\tau - PT_s) \cdots C_0(\tau) \cdots C_0(\tau + PT_s)]$ et les symboles appartenant aux constellations $\mathbf{c}_n = [c_{n-P} \cdots c_n \cdots c_{n+P}]^T$. En conséquence, le signal de l'équation 3.2 (signal reçu sur les N antennes de réception) devient

$$x(nT_s) = \mathbf{A}.\mathbf{\Omega}.\mathbf{H}.\mathbf{c}_n + \mathbf{b}(nT_s) \quad \text{où} \quad \mathbf{H} = \begin{bmatrix} \mathbf{h}(\tau_1)^T \\ \vdots \\ \mathbf{h}(\tau_M)^T \end{bmatrix} \qquad 4.6$$

est la matrice de canal. En notant par $d_k$ pour $1 \leq k \leq K$, les symboles de la séquence de référence l'objectif de la synchronisation symbole est de trouver l'indice i de symbole tel que

$$x\left((n+i)T_s\right) = \mathbf{A}.\mathbf{\Omega}.\mathbf{H}.\mathbf{d}_n + \mathbf{b}\left((n+i)T_s\right) \text{ pour } 1 \leq n \leq K \qquad\qquad 4.6'$$

sachant que $\mathbf{d}_n = [d_{n\text{-}P} \cdots d_n \cdots d_{n+P}]^T$. Dans le cas particulier des séquences TSC du GSM K=26.

Les étapes de l'algorithme consisteront tout d'abord à effectuer une synchronisation symbole 20 sur l'antenne $4_1$ de référence puis à estimer la matrice de passage entre le signal $x_1(nT_s)$ et les symboles $c_n$. Cela permettra de construire des filtres avant et arrière qui permettront d'estimer et de détecter par la méthode quadratique par exemple MMSE, les symboles de part et d'autre de la séquence d'apprentissage. Une fois que les symboles $c_n$ seront estimés 21, il sera possible d'estimer la matrice de canal $\mathbf{A}_i.\Omega.\mathbf{H}.,22$, sur chacune des commutations puis de construire la matrice de canal $\mathbf{A}.\Omega.\mathbf{H}$. Il sera alors possible d'estimer 23 les retards $\tau_p$ pour $1 \le p \le M$ à partir de la matrice $(\mathbf{A}.\Omega.\mathbf{H}.)^H (\mathbf{A}_i.\Omega.\mathbf{H}.)$, et de la connaissance du vecteur $\mathbf{h}(\tau)$. La connaissance de $\mathbf{h}(\tau)$ et des $\tau_p$ permettra de calculer la matrice $\mathbf{H}$ et de déduire la matrice $\mathbf{A}$, 24. Une goniométrie 25 sur chacune des colonnes de $\mathbf{A}$ donnera alors l'incidence $\theta_p$ de chacun des trajets. Une méthode plus directe de goniométrie des trajets consiste à appliquer un algorithme de type MUSIC sur la matrice $(\mathbf{A}.\Omega.\mathbf{H}.)(\mathbf{A}.\Omega.\mathbf{H}.)^H$. A partir de l'estimation des valeurs $\mathbf{A}_i.\Omega.\mathbf{H}.$, il sera aussi possible d'estimer les valeurs des angles $\theta_p$ à partir de la matrice $(\mathbf{A}.\Omega.\mathbf{H}.)^H (\mathbf{A}_i.\Omega.\mathbf{H}.)^H$ pour $l \le p \le M$, 26.

## Synchronisation symbole

La synchronisation symbole est effectuée sur l'antenne $4_1$ de référence où le signal de l'équation 4.6 reçu sur l'antenne de référence devient

$$x_1\big((n+i)T_s\big) = \mathbf{A}_1.\Omega.\mathbf{H}.\mathbf{d}_n + b_1\big((n+i)T_s\big) \quad \text{pour} \ 1 \le n \le K \qquad\qquad 4.7$$

où $\mathbf{A}_1$ est la première ligne de la matrice $\mathbf{A}$. La synchronisation symbole consiste à chercher l'indice i qui minimise l'écart entre $x_1((n+i)T_s)$ et $\mathbf{A}_1.\Omega.\mathbf{H}.d_n$ tel que

$$i = \min_k \big(Cri(k)\big) \ \text{avec} \ Cri(k) = \sum_{n=1}^{K}\left| x_1\big((n+k)T_s\big) - \mathbf{A}_1.\Omega.\mathbf{H}.\mathbf{d}_n \right|^2 \qquad\qquad 4.8$$

En normalisant on obtient

$$i = \max_k \big(C(k)\big) \ \text{avec} \ Cri(k) = \frac{\hat{r}_{x_1\mathbf{d}_n}(k)\big(\hat{\mathbf{R}}_{\mathbf{d}_n\mathbf{d}_n}\big)^{-1}\hat{r}_{x_1\mathbf{d}_n}(k)^H}{\hat{r}_{x_1x_1}} \qquad\qquad 4.9$$

sachant que

$$\begin{cases} \hat{r}_{x_1\mathbf{d}_n}(k) = \dfrac{1}{K}\sum_{n=1}^{K} x_1\big((n+k)T_s\big).\mathbf{d}_n^{\,H} \\[2ex] \hat{\mathbf{R}}_{\mathbf{d}_n\mathbf{d}_n} = \dfrac{1}{K}\sum_{n=1}^{K}\mathbf{d}_n.\mathbf{d}_n^{\,H} \\[2ex] \hat{r}_{x_1x_1} = \dfrac{1}{K}\sum_{n=1}^{K}\left| x_1\big((n+k)T_s\big). \right|^2 \end{cases} \qquad\qquad 4.10$$

Une fois que l'indice i de synchronisation a été estimé, la matrice $\mathbf{A}_1.\Omega.\mathbf{H}.$ est estimée en effectuant

$$\overline{\mathbf{A}_1.\Omega.\mathbf{H}} = \hat{r}_{x_1\mathbf{d}_n}(k)\big(\hat{\mathbf{R}}_{\mathbf{d}_n\mathbf{d}_n}\big)^{-1} \qquad\qquad 4.11$$

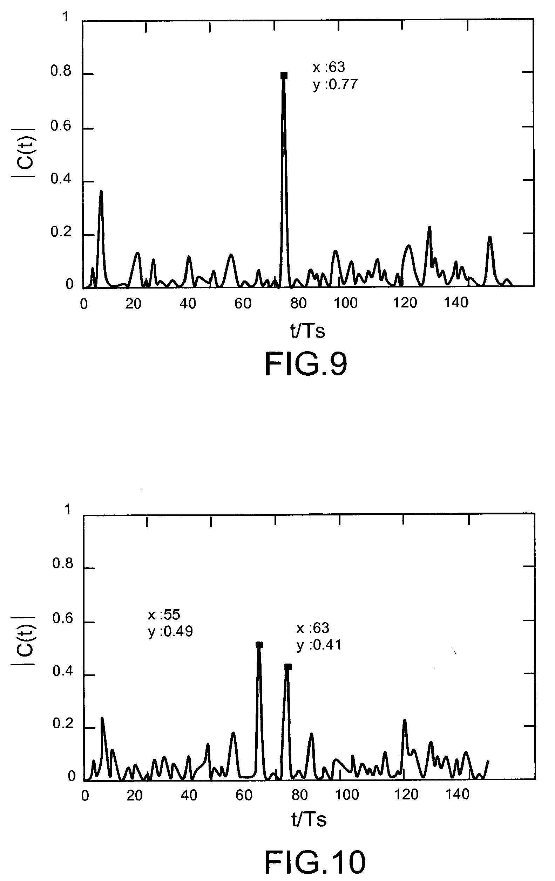

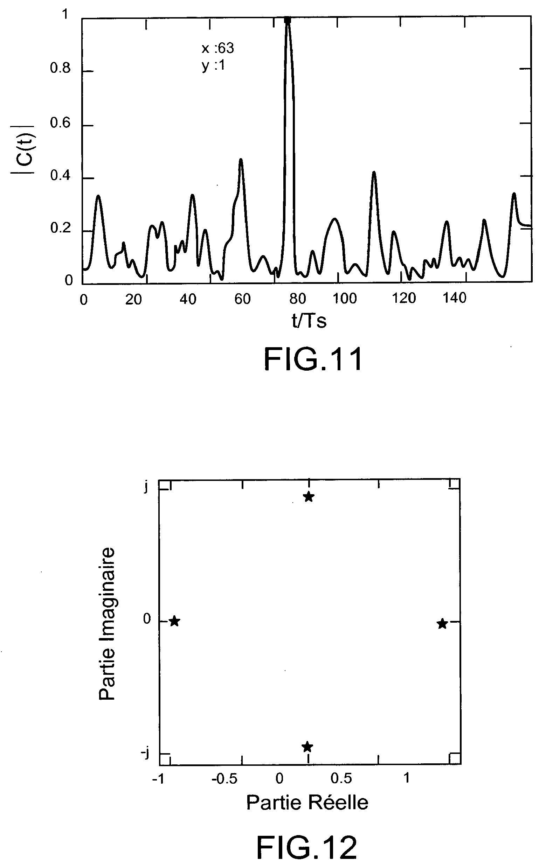

Le critère de synchronisation symbole est illustré sur les figures 9, 10 et 11 dans le cas d'une modulation GMSK pour différentes valeurs de P sachant que $\mathbf{d}_n = [d_{n\text{-}P} \cdots d_n \cdots d_{n+P}]^T$ dans le cas de trajets corrélés pour les figures 9 et 11 et de trajets décorrélés pour la figure 10.

On constate que dans les exemples des figures 9 et 10 lorsque P=0, que le pic de synchronisation ne monte pas à 1.

En effet le modèle de canal de l'équation 4.7 est dans ce cas est supposé à 1 coefficient car $\mathbf{d}_n = d_n$ alors que dans le cas de la GMSK le canal $\mathbf{A}_1.\Omega.\mathbf{H}$. s'étale au moins sur 3 symboles qui donne 3 coefficients. Dans le cas de la figure 11 pour le scénario de trajets corrélés, où le canal est supposé s'étaler sur 3 coefficients avec P=1, le critère de synchronisation donne bien un pic qui monte à 1. Cela veut dire que l'hypothèse faite sur la longueur du canal est juste et que la synchronisation symbole fonctionne.

D'un point de vue pratique l'étalement du canal dépend, d'une part de l'étalement temporel T du filtre de mise en forme $C_0(t)$ et d'autre part de l'étalement du canal caractérisé par les retards des multi-trajets. On a donc la relation suivante

$$(2P-1)T_s = T_c + \max_p\left(\tau_p\right) - \min_p\left(\tau_p\right) \qquad\qquad 4.12$$

$$\text{sachant que } C_0(t) = 0 \ \text{ lorsque } |t| < \frac{T_c}{2}$$

La valeur optimale de P est alors

$$P_{opt} = \frac{T_c + \max_p\left(\tau_p\right) - \min_p\left(\tau_p\right)}{2T_s} + 1 \qquad\qquad 4.13$$

En conséquence lorsque $P \geq P_{opt}$ alors le critère de synchronisation symbole montera à 1.

**Démodulation**

La démodulation est effectuée à partir de la matrice de canal $\mathbf{A}_1.\Omega.\mathbf{H}$. et de la séquence de référence caractérisée par les symboles $d_k$ pour $1 \leq k \leq K$, sachant que

$$\begin{cases} x_1\left(nT_s\right) \approx \mathbf{A}_1.\Omega.\mathbf{H}.\mathbf{c}_n = \displaystyle\sum_{k=-P}^{P} h_k c_{n-k} \\[2ex] x_1\left((n+i)T_s\right) \approx \mathbf{A}_1.\Omega.\mathbf{H}.\mathbf{d}_n = \displaystyle\sum_{k=-P}^{P} h_k d_{n-k} \ \text{ pour } 1 \leq n \leq K \end{cases} \qquad 4.14$$

où $h_i$ est le i-ième coefficient de la matrice de canal $\mathbf{A}_1.\Omega.\mathbf{H}$. Estimer et détecter les symboles $\{c_n\}$ à partir des coefficients de canal $h_i$ et d'une séquence de référence d(t) est un problème très classique de démodulation qui peut être traité par des techniques connu de l'homme du métier. On peut ainsi citer la méthode Viterbi, le MMSE (**M**aximum **M**ean **S**quare **E**stimator) avec ou sans DFE (Decision FEedback).

Dans la suite de ce paragraphe, un mode de fonctionnement non unique de la démodulation à base de MMSE est décrit. D'après l'équation 4.14, il est possible de construire les filtres avants et arrière suivants

$$\hat{c}_{n-P} = \frac{x_1\left(nT_s\right) - \displaystyle\sum_{k=-P+1}^{P} h_k c_{n-k}}{h_{-P}} \qquad\qquad 4.15$$

$$\hat{c}_{n+P} = \frac{x_1\left(nT_s\right) - \displaystyle\sum_{k=-P}^{P-1} h_k c_{n-k}}{h_P} \qquad\qquad 4.16$$

Le filtre arrière de l'équation 4.15 est initialisé en n=2-P+i et le filtre avant de l'équation 4.16 est initialisé en n=i+K-1+P.
A partir des valeurs estimées des coefficients $\hat{c}_n$, il est envisageable d'appliquer un MMSE qui consiste à minimiser la distance euclidienne entre $\hat{c}_n$ et les états $\eta_k$ d'une constellation. Dans le cas de la GMSK qui est à 4 états comme la QPSK alors $\eta_1 = 1$, $\eta_2 = -1$, $\eta_3 = j$ et $\eta_4 = -j$. La figure 12 qui donne les parties réelles et les parties imaginaires d'un train de symboles GMSK montrent que la constellation est de type QPSK. Le symbole démodulé est alors

$$\overline{c_n} = \eta_k \quad \text{tel que } k = \min_i \left( \left| \hat{c}_n - \eta_i \right|^2 \right) \qquad 4.17$$

Sachant que dans le cas de la GMSK $c_n = j^n b_n$ où $b_n = \prod_{i=1}^{n} a_n$ est une constellation BPSK tel que $\alpha_1 = 1$, $\alpha_2 = -1$, le symbole démodulé est alors

$$\overline{c_n} = j^n \alpha_k \quad \text{tel que } k = \min_i \left( \left| \hat{c}_n j^{-n} - \alpha_i \right|^2 \right) \qquad 4.18$$

Dans le cas de la GMSK où le module des symboles vérifie $|c_n| = 1$, il est encore possible d'améliorer le MMSE en effectuant

$$\overline{c_n} = j^n \alpha_k \quad \text{tel que } k = \min_i \left( \left| \exp\left( jangle\left( \hat{c}_n \right) \right) j^{-n} - \alpha_i \right|^2 \right) \qquad 4.19$$

**Estimation de la matrice de canal complète : A.$\Omega$.H.**

La matrice de canal complète **A.$\Omega$.H** est estimée à partir des symboles $\{c_n\}$ et des observations commutées qui d'après 4.6 vérifie

$$x_i(nT_s) = \mathbf{A}_i.\mathbf{\Omega}.\mathbf{H}.\mathbf{c}_n + b_i(nT_s) \quad \text{pour } \frac{(i-1)T}{T_s} \leq n \leq \frac{iT}{T_s} \qquad 4.20$$

où $\mathbf{A}_i.\Omega.\mathbf{H}$ est la i-ième ligne de $\mathbf{A}.\Omega.\mathbf{H}$. La matrice $\mathbf{A}_i.\Omega.\mathbf{H}$ est, par exemple, obtenue au sens des moindres carrés en minimisant l'écart entre $x_i(nT_s)$ et $\boldsymbol{c_n}$

$$\overline{\mathbf{A}_i.\mathbf{\Omega}.\mathbf{H}} = \hat{r}_{x_i \mathbf{c}_n} \left( \hat{\mathbf{R}}_{\mathbf{c}_n \mathbf{c}_n} \right)^{-1} \qquad 4.21$$

sachant que

$$\begin{cases} \hat{r}_{x_i \mathbf{c}_n}(k) = \sum_{n=n_1}^{n_2} x_1(nT_s).\mathbf{c}_n^H \\ \hat{\mathbf{R}}_{\mathbf{c}_n \mathbf{c}_n} = \sum_{n=n_1}^{n_2} \mathbf{c}_n.\mathbf{c}_n^H \end{cases} \quad \text{avec} \quad \begin{cases} n_1 = \dfrac{(i-1)T}{T_s} \\ n_2 = \dfrac{iT}{T_s} \end{cases} \qquad 4.22$$

La matrice $\mathbf{A}.\Omega.\mathbf{H}$ est alors reconstruite de la manière suivante

$$\overline{\mathbf{A}.\mathbf{\Omega}.\mathbf{H}} = \begin{bmatrix} \overline{\mathbf{A}_1.\mathbf{\Omega}.\mathbf{H}} \\ \vdots \\ \overline{\mathbf{A}_N.\mathbf{\Omega}.\mathbf{H}} \end{bmatrix} \qquad 4.23$$

**Goniométrie à partir de la matrice A.$\Omega$.H**

Une première approche consiste a appliquer l'algorithme MUSIC directement sur la matrice

$$\overline{\mathbf{R}_{AA}} \doteq \overline{\mathbf{A}.\Omega.\mathbf{H}}\left(\overline{\mathbf{A}.\Omega.\mathbf{H}}\right)^{H} \qquad 4.24$$

La détection du rang de $\overline{\mathbf{R}_{AA}}$ par une méthode connue de l'homme du métier permet de connaître le nombre M de trajets et de déduire le projecteur bruit $\Pi(\overline{\mathbf{R}_{AA}})$ de l'algorithme MUSIC. Les M incidences $\theta_p$ des trajets sont alors estimés de la manière suivante

$$\hat{\theta}_p = \min_{\theta}\left(\frac{\mathbf{a}(\theta)^{H}\,\Pi\left(\overline{\mathbf{R}_{AA}}\right)\mathbf{a}(\theta)}{\mathbf{a}(\theta)^{H}\,\mathbf{a}(\theta)}\right) \text{ pour } 1 \le p \le M \qquad 4.25$$

où le vecteur directeur $\mathbf{a}(\theta)$ est défini par les équations (3.3) et (3.4).

Une deuxième approche pour la goniométrie des multi-trajets consiste à séparer les trajets suivant leur retard pour ensuite les goniométrer indépendamment. L'estimation des retards peut être effectuée par l'algorithme MUSIC sur la matrice

$$\overline{\mathbf{R}_{HH}} = \left(\overline{\mathbf{A}.\Omega.\mathbf{H}}\right)^{H}\overline{\mathbf{A}.\Omega.\mathbf{H}} \qquad 4.26$$

La détection du rang de $\overline{\mathbf{R}_{HH}}$ par une méthode connue de l'homme du métier permet de connaître le nombre M de trajets et de déduire le projecteur bruit $\Pi(\overline{\mathbf{R}_{HH}})$ de l'algorithme MUSIC. Les M retards $\tau_p$ des trajets sont alors estimés de la manière suivante

$$\hat{\tau}_p = \min_{\tau}\left(\frac{\mathbf{h}(\tau)^{H}\,\Pi\left(\overline{\mathbf{R}_{HH}}\right)\mathbf{h}(\tau)}{\mathbf{h}(\tau)^{H}\,\mathbf{h}(\tau)}\right) \text{ pour } 1 \le p \le M \qquad 4.27$$

où le vecteur $\mathbf{h}(\tau)$ dépend du filtre de mise en forme comme indiqué équations (4.5) et (4.6). D'après (4.6), la matrice **H** est estimé de la manière suivante

$$\hat{\mathbf{H}} = \begin{bmatrix} \mathbf{h}(\hat{\tau}_1)^{T} \\ \vdots \\ \mathbf{h}(\hat{\tau}_M)^{T} \end{bmatrix} \qquad 4.28$$

Il est alors possible d'estimer la matrice **A** des vecteurs directeurs en effectuant

$$\hat{\mathbf{A}} = \overline{\mathbf{A}.\Omega.\mathbf{H}}\,\hat{\mathbf{H}}^{H}\left(\hat{\mathbf{H}}\hat{\mathbf{H}}^{H}\right)^{-1} = \left[\hat{\mathbf{a}}_1....\hat{\mathbf{a}}_M\right] \qquad 4.29$$

Sachant que la p-ième colonne $\hat{\mathbf{a}}_p$ de $\hat{\mathbf{A}}$ est associée au trajet de retard $\tau_p$, l'incidence $\theta_p$ de ce trajet est estimée en effectuant

$$\hat{\theta}_p = \min_{\theta}\left(\frac{\mathbf{a}(\theta)^H \, \mathbf{\Pi}_p \mathbf{a}(\theta)}{\mathbf{a}(\theta)^H \mathbf{a}(\theta)}\right) \text{ avec } \mathbf{\Pi}_p = \mathbf{I}_N - \frac{\hat{\mathbf{a}}_p\left(\hat{\mathbf{a}}_p\right)^H}{\left(\hat{\mathbf{a}}_p\right)^H \hat{\mathbf{a}}_p} \, . \qquad 4.30$$

La deuxième approche a l'avantage d'être plus robuste aux erreurs de calibration d'antennes car chaque trajet est goniométré indépendamment comme le montre la figure 12, où les incidences des deux trajets sont de 40° et 80°. Toutefois la méthode nécessite une bonne estimation des retards $\tau_p$.

## Revendications

1. - Procédé pour déterminer les angles d'arrivée ou la Direction d'Arrivée des multi-trajets associés à un émetteur ou source Ei dans un système comportant N antennes de réception, une desdites antennes ($4_1$) étant une antenne de référence reliée en continu à un premier récepteur ($3_1$) et les N-1 autres antennes (4i) étant reliées à un deuxième récepteur ($3_2$), de manière discontinue grâce à un commutateur bivoie (10), ladite antenne ($4_1$) de référence recevant un signal $x_1(t)$ en continu, ledit signal comprenant une séquence de référence d(t), **caractérisé en ce qu'**il comporte au moins les étapes suivantes :

   • effectuer une synchronisation symbole sur l'antenne ($4_1$) de référence puis estimer la matrice de passage entre le signal $x_1(nT_s)$ reçu sur ladite antenne de référence et les symboles de référence $d_n$, où $T_s$ est le temps symbole,
   • construire deux filtres qui permettront d'estimer et de détecter les symboles $c_n$ de part et d'autre de la séquence de référence d(t) constituée des symboles $d_n$,
   • estimer la matrice de canal $\mathbf{A}_{1i}.\Omega.\mathbf{H}$ sur chacune des commutations 1 à N à partir de la connaissance des symboles $c_n$ estimés et des signaux $x_i(nT_s)$, et construire la matrice de canal $\mathbf{A}.\Omega.\mathbf{H}$ où $\mathbf{H}$ est la matrice de canal définie par

$$\mathbf{x}(nT_s) = \mathbf{A}.\Omega.\mathbf{H}.\mathbf{c}_n + \mathbf{b}(nT_s) \quad \text{où} \quad \mathbf{H} = \begin{bmatrix} \mathbf{h}(\tau_1)^T \\ \vdots \\ \mathbf{h}(\tau_M)^T \end{bmatrix}$$

   avec $\mathbf{x}(nTs)$ le signal reçu sur les N antennes avec $\mathbf{b}(nT_s)$ le bruit et $\tau_p$ les valeurs des retards des trajets réfléchis,
   • estimer la valeur de l'angle $\theta_p$ à partir de la matrice de canal $\mathbf{A}.\Omega.\mathbf{H}$ sachant que :

$$\begin{cases} x_1\left(nT_s\right) \approx \mathbf{A}_1.\Omega.\mathbf{H}.\mathbf{c}_n = \displaystyle\sum_{k=-P}^{P} h_k c_{n-k} \\ x_1\left((n+i)T_s\right) \approx \mathbf{A}_1.\Omega.\mathbf{H}.\mathbf{d}_n = \displaystyle\sum_{k=-P}^{P} h_k d_{n-k} \quad \text{pour } 1 \le n \le K \end{cases}$$

   où $h_i$ est le i-ième coefficient de la matrice de canal $\mathbf{A}_1.\Omega.\mathbf{H}$ et **en ce que** les deux filtres avant et arrière vérifient respectivement les équations suivantes :

$$\hat{c}_{n-P} = \frac{x_1\left(nT_s\right) - \displaystyle\sum_{k=-P+1}^{P} h_k c_{n-k}}{h_{-P}}$$

$$\hat{c}_{n+P} = \frac{x_1(nT_s) - \sum_{k=-P}^{P-1} h_k c_{n-k}}{h_P}$$

**2.** - Procédé selon la revendication 1 **caractérisé en ce que** l'étape de synchronisation symbole est exécutée de la manière suivante :

on considère le signal reçu sur l'antenne de référence ($4_1$)

$$x_1((n+i)T_s) = \mathbf{A}_1.\Omega.\mathbf{H}.\mathbf{d}_n + b_1((n+i)T_s) \quad \text{pour} \ 1 \le n \le K$$

où K est le nombre de symboles de la séquence de référence, où $\mathbf{A}_1$ est la première ligne de la matrice $\mathbf{A}$, et on cherche l'indice i qui minimise l'écart entre $x1((n+i)T_s)$ le signal reçu sur l'antenne ($4_1$) et la matrice de canal $\mathbf{A}_1.\Omega.\mathbf{H}.\mathbf{d}_n$ en utilisant l'expression

$$i = \min_k \left( Cri(k) \right) \quad \text{avec} \ Cri(k) = \sum_{n=1}^{K} \left| x_1((n+k)T_s) - \mathbf{A}_1.\Omega.\mathbf{H}.\mathbf{d}_n \right|^2$$

**3.** - Procédé selon la revendication 2 **caractérisé en ce qu'**une fois que l'indice i de synchronisation estimé, la matrice canal $\mathbf{A}_1.\Omega.\mathbf{H}.$ est estimée en minimisant l'écart entre $x_i(nT_s)$ et $\boldsymbol{c}_n$

$$\overline{\mathbf{A}_i.\Omega.\mathbf{H}} = \hat{r}_{x_i c_n} \left( \hat{\mathbf{R}}_{c_n c_n} \right)^{-1}$$

$$\text{Avec} \begin{cases} \hat{r}_{x_1 c_n}(k) = \sum_{n=n_1}^{n_2} x_1(nT_s).\mathbf{c}_n^H \\ \hat{\mathbf{R}}_{c_n c_n} = \sum_{n=n_1}^{n_2} \mathbf{c}_n.\mathbf{c}_n^H \end{cases} \quad \text{avec} \begin{cases} n_1 = \dfrac{(i-1)T}{T_s} \\ n_2 = \dfrac{iT}{T_s} \end{cases}$$

**4.** - Procédé selon la revendication 1 **caractérisé en ce que** pour une démodulation à base MMSE (Maximum Mean Square Estimator) les deux filtres arrière et avant utilisés vérifient respectivement les équations suivantes :

$$\hat{c}_{n-P} = \frac{x_1(nT_s) - \sum_{k=-P+1}^{P} h_k c_{n-k}}{h_{-P}}$$

$$\hat{c}_{n+P} = \frac{x_1(nT_s) - \sum_{k=-P}^{P-1} h_k c_{n-k}}{h_P}$$

ledit filtre arrière étant initialisé en n=2-P+i et le filtre avant en n=i+K-1+P

**5.** - Procédé selon la revendication 4 **caractérisé en ce qu'**il comporte une étape d'estimation à partir des valeurs estimées $\hat{c}_n$, et une étape où l'on applique une méthode MMSE qui consiste à minimiser la distance euclidienne

entre $\hat{c}_n$ et les états $n_k$ d'une constellation, soit

$$\overline{c_n} = \eta_k \quad \text{tel que } k = \min_i \left( \left| \hat{c}_n - \eta_i \right|^2 \right)$$

6. - Procédé selon la revendication 5 **caractérisé en ce que** dans le cas de la GMSK qui est à 4 états comme la QPSK alors $\eta_1 = 1$, $\eta_2 = -1$, $\eta_3 = j$ et $\eta_4 = -j$, le symbole démodulé est alors

$$\overline{c_n} = \eta_k \quad \text{tel que } k = \min_i \left( \left| \hat{c}_n - \eta_i \right|^2 \right)$$

7. - Procédé selon la revendication 5 **caractérisé en ce que** dans le cas de la modulation GMSK où le module des symboles vérifie $|c_n| = 1$, le procédé comprend une étape d'amélioration du calcul MMSE en effectuant

$$\overline{c_n} = j^n \alpha_k \quad \text{tel que } k = \min_i \left( \left| \exp\left( jangle\left( \hat{c}_n \right) \right) j^{-n} - \alpha_i \right|^2 \right)$$

8. - Procédé selon la revendication 1 **caractérisé en ce que** la matrice de canal complète $\mathbf{A}.\Omega.\mathbf{H}$ est estimée à partir des symboles $\{c_n\}$ et des observations commutées qui vérifie

$$x_i(nT_s) = \mathbf{A}_i.\Omega.\mathbf{H}.c_n + b_i(nT_s) \text{ pour } \frac{(i-1)T}{T_s} \leq n \leq \frac{iT}{T_s}$$

où $\mathbf{A}_i.\Omega.\mathbf{H}$ est la i-ième ligne de $\mathbf{A}.\Omega.\mathbf{H}$.

9. - Procédé selon la revendication 8 **caractérisé en ce que** la matrice $\mathbf{A}_i.\Omega.\mathbf{H}$ est, obtenue au sens des moindres carrés en minimisant l'écart entre $x_i(nT_s)$ et $c_n$ pour obtenir :

$$\overline{\mathbf{A}_i.\Omega.\mathbf{H}} = \hat{r}_{x_i c_n} \left( \hat{\mathbf{R}}_{c_n c_n} \right)^{-1}$$

sachant que

$$\begin{cases} \hat{r}_{x_1 c_n}(k) = \sum_{n=n_1}^{n_2} x_1(nT_s).\mathbf{c}_n^H \\ \hat{\mathbf{R}}_{c_n c_n} = \sum_{n=n_1}^{n_2} \mathbf{c}_n.\mathbf{c}_n^H \end{cases} \quad \text{avec} \quad \begin{cases} n_1 = \frac{(i-1)T}{T_s} \\ n_2 = \frac{iT}{T_s} \end{cases}$$

reconstruire la matrice $\mathbf{A}.\Omega.\mathbf{H}$ de la manière suivante

$$\overline{\mathbf{A}.\Omega.\mathbf{H}} = \begin{bmatrix} \overline{\mathbf{A}_1.\Omega.\mathbf{H}} \\ \vdots \\ \overline{\mathbf{A}_N.\Omega.\mathbf{H}} \end{bmatrix}$$

10. - Procédé selon l'une des revendications 1 à 9 **caractérisé en ce qu'**il comporte au moins une étape où l'on applique une méthode de goniométrie sur chacune des colonnes de $\mathbf{A}$ afin de trouver les valeurs d'incidence $\theta_p$ de chacun

des trajets, et les étapes suivantes :

• estimer les valeurs des retards $\tau_p$ pour $1 \leq p \leq M$ où M est le nombre de trajets à partir de la matrice $(\mathbf{A}.\Omega.\mathbf{H})^H$ $(\mathbf{A}_1.\Omega.\mathbf{H})$. et de la connaissance du vecteur$\mathbf{h}(\tau)$, et
• à partir de la connaissance de $\mathbf{h}(\tau)$ et des valeurs des retards $\tau_p$ déterminer une matrice $\mathbf{H}$ et en déduire la matrice $\mathbf{A}$ ou une matrice dépendant linéairement de $\mathbf{A}$.

**11.** - Procédé selon l'une des revendications 1 à 9 **caractérisé en ce qu'**il comporte une étape où l'on applique un algorithme de type MUSIC sur la matrice $(\mathbf{A}.\Omega.\mathbf{H})(\mathbf{A}.\Omega.\mathbf{H})^H$.

**Patentansprüche**

**1.** Verfahren zum Bestimmen der Ankunftswinkel oder der Ankunftsrichtung von mehreren Pfaden, die mit einem/r Sender oder Quelle Ei in einem N Empfangsantennen umfassenden System assoziiert sind, wobei eine der Antennen ($4_1$) eine Referenzantenne ist, die mit einem ersten Empfänger ($3_1$) kontinuierlich verbunden ist, und die N-1 anderen Antennen ($4i$) über einen Zweiweg-Schalter 10 mit einem zweiten Empfänger ($3_2$) diskontinuierlich verbunden sind, wobei die Referenzantenne ($4_1$) kontinuierlich ein Signal $x_1(t)$ empfängt, wobei das Signal eine Referenzsequenz $d(t)$ umfasst, **dadurch gekennzeichnet, dass** es wenigstens die folgenden Schritte beinhaltet:

• Durchführen einer Symbolsynchronisation an der Referenzantenne ($4_1$), dann Schätzen der Durchgangsmatrix zwischen dem an der Referenzantenne empfangenen Signal $x_1(nT_s)$ und den Referenzsymbolen $d_n$, wobei $T_s$ die Symbolzeit ist;
• Konstruieren von zwei Filtern, die es zulassen, die Symbole $c_n$ auf beiden Seiten der Referenzsequenz $d(t)$ bestehend aus den Symbolen $d_n$ zu schätzen und zu erkennen;
• Schätzen der Kanalmatrix $\mathbf{A}_{1i}.\Omega.\mathbf{H}$ an jedem der Schalter 1 bis N auf der Basis der Kenntnis der geschätzten Symbole $c_n$ und der Signale $x_1(nT_s)$ und Konstruieren der Kanalmatrix $\mathbf{A}.\Omega.\mathbf{H}$, wobei $\mathbf{H}$ die Kanalmatrix ist, definiert durch:

$$\mathbf{x}(nT_s) = \mathbf{A}.\Omega.\mathbf{H}.\mathbf{c}_n + \mathbf{b}(nT_s) \quad \text{wobei} \quad \mathbf{H} = \begin{bmatrix} \mathbf{h}(\tau_1)^T \\ \vdots \\ \mathbf{h}(\tau_M)^T \end{bmatrix},$$

wobei $x(nTs)$ das an den N Antennen empfangene Signal ist, wobei $\mathbf{b}(nT_s)$ Rauschen ist und $\tau_p$ die Werte der Verzögerungen der reflektierten Pfade sind;
• Schätzen des Wertes des Winkels θp auf der Basis der Kanalmatrix $\mathbf{A}.\Omega.\mathbf{H}$. in der Kenntnis von:

$$\begin{cases} x_1(nT_s) \approx \mathbf{A}_1.\Omega.\mathbf{H}.\mathbf{c}_n = \sum_{k=-P}^{P} h_k c_{n-k} \\ x_1((n+i)T_s) \approx \mathbf{A}_1.\Omega.\mathbf{H}.\mathbf{d}_n = \sum_{k=-P}^{P} h_k d_{n-k} \end{cases} \quad \text{für } 1 \leq n \leq K,$$

wobei $h_i$ der i-te Koeffizient der Kanalmatrix $\mathbf{A}_1.\Omega.\mathbf{H}$ ist, und dadurch, dass die beiden vorderen und hinteren Filter jeweils die folgenden Gleichungen verifizieren:

$$\hat{c}_{n-P} = \frac{x_1(nT_s) - \sum_{k=-P+1}^{P} h_k c_{n-k}}{h_{-P}}$$

$$\hat{c}_{n+P} = \frac{x_1\left(nT_s\right) - \displaystyle\sum_{k=-P}^{P-1} h_k c_{n-k}}{h_P} \quad .$$

2. Verfahren nach Anspruch 1, **dadurch gekennzeichnet, dass** der Symbolsynchronisationsschritt wie folgt ausgeführt wird:

es wird das an der Referenzantenne ($4_1$) empfangene Signal betrachtet:

$$x_1\left(\left(n+i\right)T_s\right) = \mathbf{A}_1.\Omega.\mathbf{H}.\mathbf{d}_n + b_1\left(\left(n+i\right)T_s\right) \quad \text{für } 1 \le n \le K,$$

wobei K die Anzahl von Symbolen der Referenzsequenz ist, wobei $\mathbf{A}_1$ die erste Zeile der Matrix $\mathbf{A}$ ist, und der Index i, der die Abweichung zwischen dem an der Antenne ($4_1$) empfangenen Signal $x_1((n + i)T_s)$ und der Kanalmatrix $\mathbf{A}_1.\Omega.\mathbf{H}.\mathbf{d}_n$ minimiert, mit dem folgenden Ausdruck gefunden wird:

$$i = \min_k\left(Cri\left(k\right)\right) \quad \text{mit} \quad Cri\left(k\right) = \sum_{n=1}^{K}\left|x_1\left(\left(n+k\right)T_s\right) - \mathbf{A}_1.\Omega.\mathbf{H}.\mathbf{d}_n\right|^2 \quad .$$

3. Verfahren nach Anspruch 2, **dadurch gekennzeichnet, dass** nach dem Schätzen des Synchronisationsindexes i die Kanalmatrix $\mathbf{A}_1.\Omega.\mathbf{H}.$ durch Minimieren der Abweichung zwischen $x_i(nT_s)$ und $\mathbf{c}_n$ geschätzt wird:

$$\overline{\mathbf{A}_i.\Omega.\mathbf{H}} = \hat{r}_{x_i c_n}\left(\hat{\mathbf{R}}_{c_n c_n}\right)^{-1}$$

$$\text{mit} \begin{cases} \hat{r}_{x_1 c_n}\left(k\right) = \displaystyle\sum_{n=n_1}^{n_2} x_1\left(nT_s\right).\mathbf{c}_n^H \\ \hat{\mathbf{R}}_{c_n c_n} = \displaystyle\sum_{n=n_1}^{n_2} \mathbf{c}_n.\mathbf{c}_n^H \end{cases} \quad \text{mit} \begin{cases} n_1 = \dfrac{(i-1)T}{T_s} \\ n_2 = \dfrac{iT}{T_s} \end{cases} \quad .$$

4. Verfahren nach Anspruch 1, **dadurch gekennzeichnet, dass** für eine Demodulation auf der Basis von MMSE (Maximum Mean Square Estimator) die beiden hinteren und vorderen Filter, die benutzt werden, jeweils die folgenden Gleichungen verifizieren:

$$\hat{c}_{n-P} = \frac{x_1\left(nT_s\right) - \displaystyle\sum_{k=-P+1}^{P} h_k c_{n-k}}{h_{-P}}$$

$$\hat{c}_{n+P} = \frac{x_1\left(nT_s\right) - \displaystyle\sum_{k=-P}^{P-1} h_k c_{n-k}}{h_P}$$

wobei das hintere Filter bei n=2-P+i initialisiert wird und das vordere Filter bei n=i+K-1+P initialisiert wird.

5. Verfahren nach Anspruch 4, **dadurch gekennzeichnet, dass** es einen Schritt des Schätzens, auf der Basis von geschätzten Werten $\hat{c}_n$, und einen Schritt des Anwendens eines MMSE-Prozesses beinhaltet, der das Minimieren des euklidischen Abstands zwischen $\hat{c}_n$ und den Zuständen $\eta_k$ einer Konstellation beinhaltet, d.h.:

$$\overline{c_n} = \eta_k \text{ , so dass } k = \min_i \left( \left| \hat{c}_n - \eta_i \right|^2 \right).$$

**6.** Verfahren nach Anspruch 5, **dadurch gekennzeichnet, dass** im Falle von GMSK, der 4 Zustände wie QPSK hat, d.h. $\eta_1 = 1$, $\eta_2 = -1$, $\eta_3 = j$ und $\eta_4 = -j$, das demodulierte Symbol dann wie folgt ist:

$$\overline{c_n} = \eta_k \text{ , so dass } k = \min_i \left( \left| \hat{c}_n - \eta_i \right|^2 \right).$$

**7.** Verfahren nach Anspruch 5, **dadurch gekennzeichnet, dass** im Falle der GMSK-Modulation, bei der das Symbol-Modul $|c_n| = 1$ verifiziert, das Verfahren einen Schritt des Verbesserns der MMSE-Berechnung beinhaltet, durch Ausführen von:

$$\overline{c_n} = j^n \alpha_k \text{ , so dass } k = \min_i \left( \left| \exp\left( jangle\left( \hat{c}_n \right) \right) j^{-n} - \alpha_i \right|^2 \right).$$

**8.** Verfahren nach Anspruch 1, **dadurch gekennzeichnet, dass** die komplette Kanalmatrix $\mathbf{A}.\Omega.\mathbf{H}$ auf der Basis der Symbole $\{c_n\}$ und von kommutierten Beobachtungen geschätzt wird, die Folgendes verifizieren:

$$x_i(nT_s) = \mathbf{A}_i.\Omega.\mathbf{H}.\mathbf{c}_n + b_i(nT_s) \text{ für } \frac{(i-1)T}{T_s} \leq n \leq \frac{iT}{T_s},$$

wobei $\mathbf{A}_i.\Omega.\mathbf{H}$ die i-te Zeile von $\mathbf{A}.\Omega.\mathbf{H}$ ist.

**9.** Verfahren nach Anspruch 8, **dadurch gekennzeichnet, dass** die Matrix $\mathbf{A}_i.\Omega.\mathbf{H}$ im Kleinste-Quadrate-Sinne durch Minimieren der Abweichung zwischen $x_i(nT_s)$ und $\mathbf{c}_n$ erhalten wird, um Folgendes zu erhalten:

$$\overline{\mathbf{A}_i.\Omega.\mathbf{H}} = \hat{r}_{x_i c_n} \left( \hat{\mathbf{R}}_{c_n c_n} \right)^{-1}$$

in der Kenntnis, dass:

$$\begin{cases} \hat{r}_{x_i c_n}(k) = \sum_{n=n_1}^{n_2} x_1(nT_s).\mathbf{c}_n^H \\ \hat{\mathbf{R}}_{c_n c_n} = \sum_{n=n_1}^{n_2} \mathbf{c}_n.\mathbf{c}_n^H \end{cases} \text{ mit } \begin{cases} n_1 = \frac{(i-1)T}{T_s} \\ n_2 = \frac{iT}{T_s} \end{cases},$$

Rekonstruieren der Matrix $\mathbf{A}.\Omega.\mathbf{H}$ wie folgt:

$$\overline{\mathbf{A}.\Omega.\mathbf{H}} = \begin{bmatrix} \overline{\mathbf{A}_1.\Omega.\mathbf{H}} \\ \vdots \\ \overline{\mathbf{A}_N.\Omega.\mathbf{H}} \end{bmatrix}.$$

**10.** Verfahren nach einem der Ansprüche 1 bis 9, **dadurch gekennzeichnet, dass** es wenigstens einen Schritt, bei dem ein Peilprozess auf jede der Spalten von A angewendet wird, um die Inzidenzwerte $\theta_p$ jedes der Pfade zu finden, und die folgenden Schritte beinhaltet:

• Schätzen der Werte der Verzögerungen $\tau_p$ für $1 \le p \le M$, wobei M die Anzahl von Pfaden ist, auf der Basis der Matrix $(\mathbf{A}.\Omega.\mathbf{H})^H (\mathbf{A}.\Omega.\mathbf{H})$ und der Kenntnis des Vektors $\mathbf{h}(\tau)$; und
• Ermitteln, auf der Basis der Kenntnis von $\mathbf{h}(\tau)$ und der Werte der Verzögerungen $\tau_p$, einer Matrix $\mathbf{H}$, und Ableiten der Matrix A oder einer linear von A abhängigen Matrix davon.

**11.** Verfahren nach einem der Ansprüche 1 bis 9, **dadurch gekennzeichnet, dass** es einen Schritt beinhaltet, bei dem ein Algorithmus des MUSIC-Typs auf die Matrix $(\mathbf{A}.\Omega.\mathbf{H})(\mathbf{A}.\Omega.\mathbf{H})^H$ angewandt wird.

## Claims

**1.** A method for determining the angles of arrival or the direction of arrival of multiple paths associated with a transmitter or a source Ei in a system comprising N reception antennae, one of said antennae ($4_1$) being a reference antenna continuously linked to a first receiver ($3_1$) and the N-1 other antennae (4i) being discontinuously linked to a second receiver ($3_2$) by means of a two-way switch (10), said reference antenna ($4_1$) continuously receiving a signal $x_1(t)$, said signal comprising a reference sequence d(t), **characterised in that** it comprises at least the following steps:

• carrying out a symbol synchronisation on said reference antenna ($4_1$), then estimating the passage matrix between the signal $x_1(nT_s)$ received on said reference antenna and the reference symbols $d_n$, where $T_s$ is the symbol time;
• generating two filters that will allow the symbols $c_n$ on both sides of said reference sequence d(t) made up of said symbols $d_n$ to be estimated and detected;
• estimating the channel matrix $\mathbf{A}_{li}.\Omega.\mathbf{H}.$ on each switch 1 to N based on the knowledge of the estimated symbols $c_n$ and of the signals $x_i(nT_s)$ and constructing the channel matrix $\mathbf{A}.\Omega.\mathbf{H}.$, where $\mathbf{H}$ is the channel matrix defined by:

$$\mathbf{x}(nT_s) = \mathbf{A}.\Omega.\mathbf{H}.\mathbf{c}_n + \mathbf{b}(nT_s) \quad \text{where} \quad \mathbf{H} = \begin{bmatrix} \mathbf{h}(\tau_1)^T \\ \vdots \\ \mathbf{h}(\tau_M)^T \end{bmatrix},$$

with x(nTs) being the signal received on the N antennae, with $\mathbf{b}(nT_s)$ being noise and $\tau_p$ being the values of the delays of the reflected paths;
• estimating the value of the angle θp based on the channel matrix $\mathbf{A}.\Omega.\mathbf{H}.$, knowing that:

$$\begin{cases} x_1(nT_s) \approx \mathbf{A}_1.\Omega.\mathbf{H}.\mathbf{c}_n = \sum_{k=-P}^{P} h_k c_{n-k} \\ x_1((n+i)T_s) \approx \mathbf{A}_1.\Omega.\mathbf{H}.\mathbf{d}_n = \sum_{k=-P}^{P} h_k d_{n-k} \end{cases} \quad \text{for } 1 \le n \le K,$$

where $h_i$ is the i-th coefficient of the channel matrix $\mathbf{A}_1.\Omega.\mathbf{H}.$, and **in that** the two front and rear filters respectively verify the following equations:

$$\hat{c}_{n-P} = \frac{x_1(nT_s) - \sum_{k=-P+1}^{P} h_k c_{n-k}}{h_{-P}}$$

$$\hat{c}_{n+P} = \frac{x_1(nT_s) - \sum_{k=-P}^{P-1} h_k c_{n-k}}{h_P}$$

.

2. The method according to claim 1, **characterised in that** said symbol synchronisation step is executed as follows:

the signal received on said reference antenna $(4_1)$ is considered:

$$x_1\big((n+i)T_s\big) = \mathbf{A}_1.\Omega.\mathbf{H}.\mathbf{d}_n + b_1\big((n+i)T_s\big) \quad \text{for } 1 \le n \le K,$$

where K is the number of symbols of said reference sequence, where $\mathbf{A}_1$ is the first line of the matrix A, and the index i that minimises the deviation between the signal $x_1((n+i)T_s)$ received on said antenna $(4_1)$ and the channel matrix $\mathbf{A}_1.\Omega.\mathbf{H}.\mathbf{d}_n$ is sought using the following expression:

$$i = \min_k \big(Cri(k)\big) \quad \text{with} \quad Cri(k) = \sum_{n=1}^{K} \Big| x_1\big((n+k)T_s\big) - \mathbf{A}_1.\Omega.\mathbf{H}.\mathbf{d}_n \Big|^2 .$$

3. The method according to claim 2, **characterised in that** once the synchronisation index i has been estimated, the channel matrix $\mathbf{A}_1.\Omega.\mathbf{H}.$ is estimated by minimising the deviation between $x_i(nT_s)$ and $\mathbf{c}_n$:

$$\overline{\mathbf{A}_i.\Omega.\mathbf{H}} = \hat{r}_{x_i \mathbf{c}_n} \Big( \hat{\mathbf{R}}_{\mathbf{c}_n \mathbf{c}_n} \Big)^{-1}$$

$$\text{with} \begin{cases} \hat{r}_{x_i \mathbf{c}_n}(k) = \sum_{n=n_1}^{n_2} x_1(nT_s).\mathbf{c}_n^H \\ \hat{\mathbf{R}}_{\mathbf{c}_n \mathbf{c}_n} = \sum_{n=n_1}^{n_2} \mathbf{c}_n.\mathbf{c}_n^H \end{cases} ; \quad \text{with} \begin{cases} n_1 = \dfrac{(i-1)T}{T_s} \\ n_2 = \dfrac{iT}{T_s} \end{cases} .$$

4. The method according to claim 1, **characterised in that** for an MMSE (Maximum Mean Square Estimator) based demodulation, the two rear and front filters that are used respectively verify the following equations:

$$\hat{c}_{n-P} = \frac{x_1(nT_s) - \sum_{k=-P+1}^{P} h_k c_{n-k}}{h_{-P}}$$

$$\hat{c}_{n+P} = \frac{x_1(nT_s) - \sum_{k=-P}^{P-1} h_k c_{n-k}}{h_P}$$

said rear filter being initialised at n=2-P+i and said front filter being initialised at n=i+K-1+P.

5. The method according to claim 4, **characterised in that** it comprises a step of estimating on the basis of estimated values $\hat{c}_n$ and a step of applying an MMSE process that involves minimising the Euclidean distance between $\hat{c}_n$ and the states $\eta_k$ of a constellation, that is:

$$\overline{c_n} = \eta_k \text{ , such that } k = \min_i \big( |\hat{c}_n - \eta_i|^2 \big) .$$

6. The method according to claim 5, **characterised in that** in the case of GMSK, which has 4 states, as is the case for QPSK, then $\eta_1 = 1$, $\eta_2 = -1$, $\eta_3 = j$ and $\eta_4 = -j$, the demodulated symbol is then:

$$\overline{c_n} = \eta_k \text{ , such that } k = \min_{i}\left(\left|\hat{c}_n - \eta_i\right|^2\right).$$

7. The method according to claim 5, **characterised in that** in the case of GMSK modulation where the modulus of the symbols verifies $|c_n| = 1$, the method comprises a step of improving the MMSE computation by performing:

$$\overline{c_n} = j^n \alpha_k \text{ , such that } k = \min_{i}\left(\left|\exp\left(jangle\left(\hat{c}_n\right)\right)j^{-n} - \alpha_i\right|^2\right).$$

8. The method according to claim 1, **characterised in that** the complete channel matrix $\mathbf{A}.\Omega.\mathbf{H}$ is estimated on the basis of the symbols $\{c_n\}$ and of commutated observations that verify:

$$x_i(nT_s) = \mathbf{A}_i.\Omega.\mathbf{H}.c_n + b_i(nT_s) \text{ for } \frac{(i-1)T}{T_s} \le n \le \frac{iT}{T_s},$$

where $\mathbf{A}_i.\Omega.\mathbf{H}$ is the i-th line of $\mathbf{A}.\Omega.\mathbf{H}.$

9. The method according to claim 8, **characterised in that** the matrix $\mathbf{A}_i.\Omega.\mathbf{H}$ is obtained in the least squares sense by minimising the deviation between $x_i(nT_s)$ and $\mathbf{c}_n$ to obtain:

$$\overline{\mathbf{A}_i.\Omega.\mathbf{H}} = \hat{r}_{x_i c_n}\left(\hat{\mathbf{R}}_{c_n c_n}\right)^{-1}$$

knowing that:

$$\begin{cases} \hat{r}_{x_i c_n}(k) = \sum_{n=n_1}^{n_2} x_1(nT_s).\mathbf{c}_n^{H} \\ \hat{\mathbf{R}}_{c_n c_n} = \sum_{n=n_1}^{n_2} \mathbf{c}_n.\mathbf{c}_n^{H} \end{cases} \text{ with } \begin{cases} n_1 = \dfrac{(i-1)T}{T_s} \\ n_2 = \dfrac{iT}{T_s} \end{cases},$$

reconstructing the matrix $\mathbf{A}.\Omega.\mathbf{H}$ as follows:

$$\overline{\mathbf{A}.\Omega.\mathbf{H}} = \begin{bmatrix} \overline{\mathbf{A}_i.\Omega.\mathbf{H}} \\ \vdots \\ \overline{\mathbf{A}_N.\Omega.\mathbf{H}} \end{bmatrix}.$$

10. The method according to any one of claims 1 to 9, **characterised in that** it comprises at least one step during which a goniometry process is applied to each of the columns of $\mathbf{A}$ in order to find the incidence values $\theta_p$ of each of the paths, and **in that** it comprises the following steps:

- estimating the values of the delays $\tau_p$ for $1 \le p \le M$, where M is the number of paths, on the basis of the matrix $(\mathbf{A}.\Omega.\mathbf{H})^H (\mathbf{A}.\Omega.\mathbf{H})$. and of the knowledge of the vector $\mathbf{h}(\tau)$; and
- determining, on the basis of the knowledge of $\mathbf{h}(\tau)$ and of the values of the delays $\tau_p$, a matrix $\mathbf{H}$ and deducing therefrom the matrix $\mathbf{A}$ or a matrix that is linearly dependent on $\mathbf{A}.$

11. The method according to any one of claims 1 to 9, **characterised in that** it comprises a step during which an algorithm of the MUSIC type is applied to the matrix $(\mathbf{A}.\Omega.\mathbf{H}(\mathbf{A}.\Omega.\mathbf{H})^H.$

**FIG.1**

**FIG.2**

Source

Réseau de
capteurs

$E_i$

$K(\underline{\Theta}_{m1})$

$\underline{\Theta}_{m1}$

$K(\underline{\Theta}_{m2})$

$\underline{\Theta}_{m2}$

1

$4_i$

2

# FIG.3

$y$

$2^{ème}$ capteur

$3^{ème}$ capteur

$x_2$

$y_2$

A

$x$

$4^{ème}$ capteur

$1^{er}$ capteur

$R$

$5^{ème}$ capteur

# FIG.4

11

$3_1$

10

$4_1$

$K(\underline{\Theta}_{m1})$

Source

$\underline{\Theta}_{m1}$

$K(\underline{\Theta}_{m2})$

$\underline{\Theta}_{m2}$

$3_2$

Réseau de
capteurs

Obstacle

$\underline{\Theta}_{mp}$ $(1 \leq p \leq P)$

# FIG.5

Voie 1

$\delta t$

Voie 2

$\delta t$

Voie 3

$\delta t$

Voie 4

Temps

Voie N

$r_{12}$    $r_{23}$    $r_{34}$    $r_{N1}$    $r_{12}$

# FIG.6

$S(t)$

$d(t)$    $d(t)$

$t_1$   $T_{max}$    $t_2$   $T_{max}$    *Temps (t)*

# FIG.7

Détection de l'instant $t_k$ de présence de la séquence de référence d(t) sur l'antenne de référence $\sim$20

Estimation des symboles $c_n$ sur N -1 commutations avec le signal reçu sur l'antenne de référence $\sim$21

Estimation des $A_i.\Omega.H$ à partir des valeurs des symboles pour chaque commutation avec les antennes 1 et i $\sim$22

26$\sim$ Estimation des valeurs des angles à partir de la matrice $(A.\Omega.H) (A_i.\Omega.H)^H$ .

Estimation des retards $\tau_p$ à partir de la matrice $(A.\Omega.H)^H (A_i.\Omega.H)$ . $\sim$23

$\theta_p$ pour I≤p≤M

Estimation de H à partir des $\tau_p$ et déduction de $A=[a_1 ....a_P]$ $\sim$24

Boucle sur p

Estimation de l'incidence $\theta_p$ du p-ième trajet à partir de $a_p$. $\sim$25

$\theta_p$

# FIG.8

FIG.9

FIG.10

FIG.11

FIG.12

**RÉFÉRENCES CITÉES DANS LA DESCRIPTION**

**Documents brevets cités dans la description**

- US 6989789 B
- US 6693591 B
- US 7019635 B